# EUROPEAN PATENT APPLICATION

(11) **EP 1 331 743 A1**
(43) Date of publication of application: **30.07.2003**
(21) Application number: 02360035.6
(22) Date of filing: 18.01.2002
(51) Int. Cl.: H04B 1/707, H04L 27/36

(54) **A method and an electronic circuit for clipping of signals, especially CDMA or OFDM signals, with multiple inputs and outputs**

(71) Applicant: ALCATEL, 75008 Paris (FR)
(72) Inventor: Mortensen, Ivar, Dr., 70499 Stuttgart (DE); Neustadt, Alf, Dipl.-Ing., 70199 Stuttgart (DE)
(74) Representative: Richardt, Markus Albert

(57) **Abstract**

The invention relates to a method and to an electronic circuit for clipping of at least first (CS1) and a second input (CS2) signals to provide an output signal (C) which does not exceed a predefined threshold, the electronic circuit comprising:
- input means for inputting of a first sample of the first input signal (CS1) and of a second sample of the second input signal (CS2),
- means (12) for applying a criterion on the first and second samples,
- means (12) for clipping the first and/or second sample if the criterion is fullfilled in order to enable subsequent filter (13) and summation operations (15) of the first and second input signals such that the predefined threshold is not exceeded.

This invention thereby enables to perform a joined clipping operation rather than clipping each carrier separately. The action of the pulse shaping filter can be taken into account.

## Description

### Field of the invention

The present invention relates to the field of clipping and, more particularly, to a method and an electronic circuit for mitigating signal distortions in a communication system.

### Background and prior art

It is as such known from the prior art to use clipping techniques to prevent amplifier saturation. Clipping is a useful technique especially for signals with a high peak to average power ratio (PAPR). Such signals are used in systems which use multi-code CDMA or multi sub-channel OFDM. Such systems need output power amplifiers with large dynamic ranges.

If the amplifiers cannot handle the peak powers then the resulting saturation causes intermodulation products and adjacent channel interference (ACI). A number of techniques exist for reducing the peak to average ratio, but many of these are modulation dependent, for example, coding, partial transmit sequences, phasing for OFDM and Multi-Carrier Spread Spectrum.

WO 98 / 446668 shows a method for reducing the PAPR of a composite carrier signal. A peak-reducing waveform is estimated and summed with a composite signal to reduce a peak-to-average power ratio of the composite signal. The estimate of the peak-reducing waveform is modified to have Walsh code components orthogonal to the assigned Walsh codes. An iterative process of estimating subsequent peak-reducing waveform is implemented to produce a peak-reducing waveform which, when summed with the composite signal, results in a composite signal having a peak-to-average ratio at a desired level and thus does not have the effects of remodulating the assigned Walsh codes. Constraints on the magnitude of the unassigned Walsh code components can be included for controlling the power level under the unassigned Walsh codes.

EP 545 596 A1 shows a deviation limiting transmission circuit which comprises a soft clipper which performs measurements at two nodes. The soft clipper limits both its own output signal and the output signal of a low-pass / band-stop filter to selected maximum values, thus preventing prolonged deviation overshoots.

EP 106 7683 A1 shows a clipping method whereby the clipping is performed dependent on succeeding filtering taking into account the filter characteristics. This method is only applicable for single carrier systems.

From "Peak power reduction for multi-code CDMA and critically sampled complex Gaussian signals" - Reza Berangi and Mike Faulkner, School of Communications and Informatics, IST 2001, 1-3 September 2001 an adaptive technique is known which reduces the risk of overcompensating (over-clipping). This is achieved by using an additional filter to predict the response of the pulse-shaping filter from which the exact amount of compensation can be calculated.

It is an object of the present invention to provide an improved clipping method and electronic circuit for clipping, in particular for direct sequence code division multiple access (DS-CDMA) cellular telecommunication systems.

### Summary of the invention

The underlying problem of the present invention is solved basically by applying the features laid down in the independent claims. Preferred embodiments of the invention are given in the dependent claims.

The present invention is particularly advantageous for multi-carrier amplifiers. The invention enables to perform a joined clipping operation rather than clipping each carrier separately. Clipping is performed when a criterion is fulfilled which is common to all signals to be amplified by the multi-carrier amplifier.

This is particularly advantageous as a joined clipping criterion can prevent unnecessary clipping. For example clipping can be avoided in accordance with the present invention in a situation where one of the signals has a strong amplitude while signals intended for other carriers have a low amplitude as the overall signal will not exceed the threshold level for the linear range of the amplifier.

In accordance with a preferred embodiment of the invention the criterion is the sum of the amplitudes of the current signal samples being input into the clipper. If the sum of the amplitudes is below a predefined threshold level no clipping is performed. If the sum of the amplitudes exceeds the predefined threshold level clipping is performed for example by multiplying all of the sample amplitudes with a factor which is smaller than one.

In accordance with a further preferred embodiment of the invention the subsequent pulse shaping filtering and frequency multiplexing of the signals is taken into consideration for the clipping operation. This way re-growth of the clipped peaks above the threshold level caused by interpolation in the pulse shaping filter is avoided. Another advantage is that the phase angles of the samples can also be considered for the clipping in addition to the amplitude. This has the advantage that unnecessary clipping is avoided, especially in situations where one or more of the samples are of opposite or substantially different phase angles.

### Brief description of the drawings

In the following preferred embodiments of the invention are described in greater detail by making reference to the drawings in which:
- Figure 1: is a block diagram of a first embodiment of a system for predictive clipping for a multi carrier solution,
- Figure 2: is an alternative embodiment where the interpolation and frequency multiplexing is taken into consideration for the clipping,
- Figure 3: is illustrative of the generation of the frequency multiplexing signals,
- Figure 4: is a block diagram of a preferred embodiment of the clipper of figure 2,
- Figure 5: is illustrative of the transformation formulas used within the clipper of figure 4.

### Detailed description

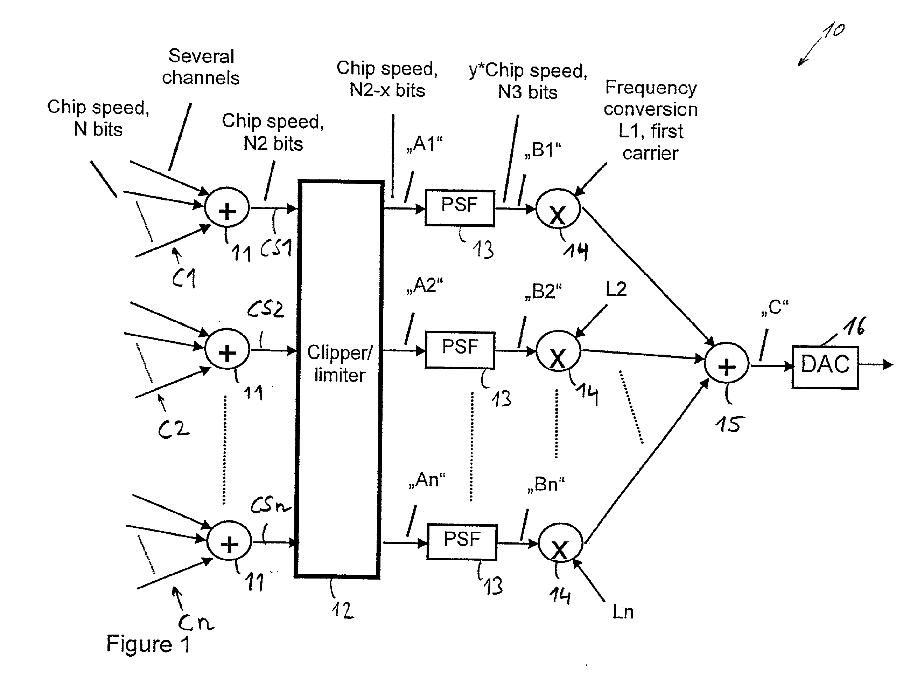

Figure 1 shows a part of an electrical circuit 10 of a transmitter of a radio base station of a DS-CDMA cellular telecommunication system. The electrical circuit 10 has an number of summers 11, which are coupled to a clipper 12.

The clipper 12 is connected to a number of pulse shaping filters 13 which are in turn connected to multipliers 14 for frequency conversion. The outputs of the multipliers 14 are added by means of summer 15. The output of summer 15 is coupled to digital-to-analogue-converter 16 which serves to convert the digital signal outputted by summer 15 to an analogue signal which is to be amplified by means of an amplifier which is not shown in figure 1.

In operation each of the summers 11 is coupled to a number of channels C1, C2, ... Cn. The information of each of the channels C1, C2, ... Cn belonging to the same summer 11 is summed in that summer 11 to generate a respective composite signal CS1, CS2, ...CSn.

Each of the composite signals CS1, CS2, ...CSn is inputted to the clipper 12 which produces the clipped composite signals A1, A2, ..., An. Each of the clipped composite signals A1, A2, ..., An is inputted into the corresponding pulse shaping filter 13. This results in the signals B1, B2, ..., Bn, respectively. The clipped and filtered composite signals B1, B2, ..., Bn are inputted into respective multipliers 14 for frequency conversion. The frequency converted signals B1, B2, ..., Bn are summed by means of summer 15 to create a frequency multiplexed multi carrier signal C.

The clipper 12 determines the amplitude of all of the composite signals CS1, CS2, ..., CSn. Further the clipper 12 generates an internal signal by summing up all of these amplitudes. The total of the amplitude values is than compared to a predefined threshold value. If the total of the amplitudes is below the threshold value no clipping is performed. This means that the output signals A1, A2, ..., An are equal to the input signals CS1, CS2, ..., CSn. In other words the clipper 12 is transparent when no clipping is performed.

When the total of the amplitude values exceeds the predefined threshold value clipping is performed by the clipper 12. In this instance a factor is calculated by the clipper 12 by dividing the threshold value by the total of the amplitude values. This factor is by definition smaller than one. Then the clipper 12 multiplies all of the composite signals CS1, CS2, ..., CSn with the factor in order to clip the corresponding signal samples. This results in clipped output signals A1, A2, ..., An.

The joined clipping reduces effectively the peak to average ratio obtained on the multi carrier signal C which is provided to the amplifier. This results in a better power efficiency of the amplifier.

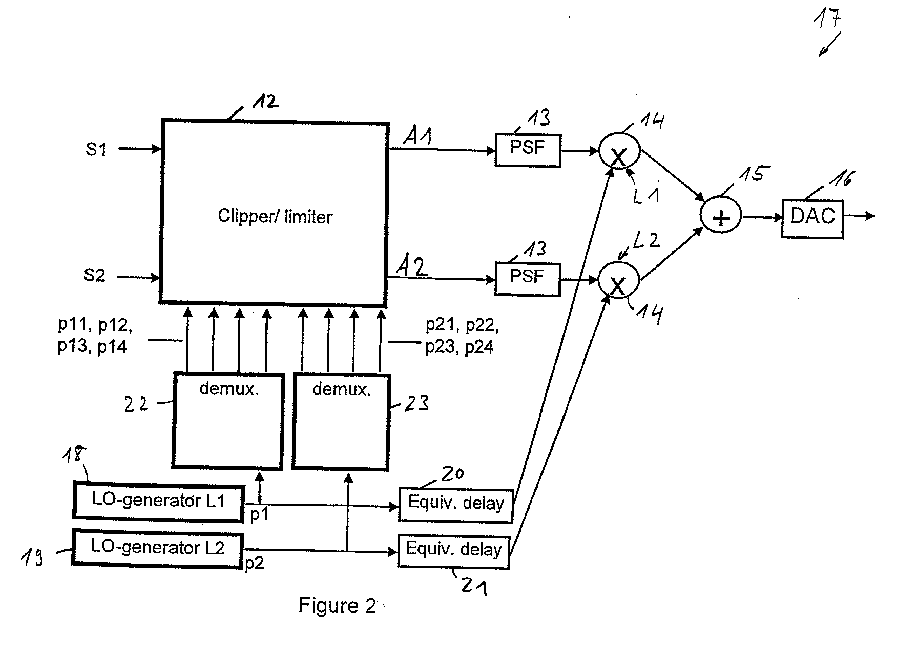

Figure 2 shows an alternative embodiment, where like elements are designated by the same reference numerals as in the embodiment of figure 1.

The electrical circuit 17 of figure 2 has an LO-generator 18 for generating a signal p1 for the frequency conversion L1 as well as a LO-generator 19 for generating a signal p2 for frequency conversion L2 within the multipliers 14, respectively. The signals p1 and p2 are inputted into delay elements 20 and 21, respectively for delaying the signals p1 and p2. By means of the delayed signals p1 and p2 the frequency conversions L1 and L2 are carried out in the multipliers 14, respectively.

Further the signals p1 and p2 are inputted into the demultiplexer 22 and 23, respectively.

The demultiplexer 22 outputs the sub-signals p11, p12, p13 and p14 of the signal p1 and the demultiplexer 23 outputs the sub-signals p21,p22, p23, p 24 of the signal p2. These demultiplexed signals are inputted into the clipper 12.

In the example considered here the clipper 12 receives at its input the input signals S1 and S2 corresponding to the composite signals CS1 and CS2 of figure 1. The input signals S1 and S2 are processed within clipper 12 by means of the demultiplexed sub-signals and by means of the filter coefficients of the pulse shaping filters 13.

As the number of input signals S1 and S2 is equal to n = 2 in the example considered here an over-sampling coefficient of at least four is required. The pulse shaping filter 13 has a length of M. For the purposes of the clipper 12 the pulse shaping filter 13 is approximated by a filter of length 7 with the filter coefficients a, b, c, d, c, b, a. These coefficients are at the same time the central coefficients of the pulse shaping filters 13. In the example considered here the pulse shaping filters 13 are identical; however it is important to note, that this is not essential and that the pulse shaping filters for the different channels can have different filter lengths and / or filter coefficients.

The operation of the clipper 12 is predictive as it involves the subsequent interpolations performed by the pulse shaping filters 13 and the frequency conversions L1 and L2. This is made possible by providing the sub-signals of the signals p1 and p2 to the clipper 12 and by providing a priori knowledge to the clipper 12 regarding the characteristics of the pulse shaping filters 13. The delay elements 20 and 22 are necessary in the preferred embodiment of figure 2 to account for the delay caused by the processing within the clipper 12 and the delay caused by the pulse shaping filters.

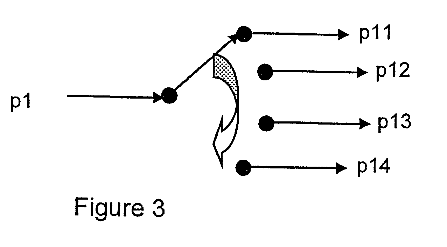

The two LO-generators 18 and 19 generate complex signals with amplitudes equal to one and with a phase dependent on the frequency conversion L1 or L2. The output signals p1 and p2 are sampled at four times chip speed. The demultiplexing of the signals p1 and p2 into the four separate signals, respectively, is performed in a "Round Robin" way, as illustrated in figure 3 with respect to the signal P1.

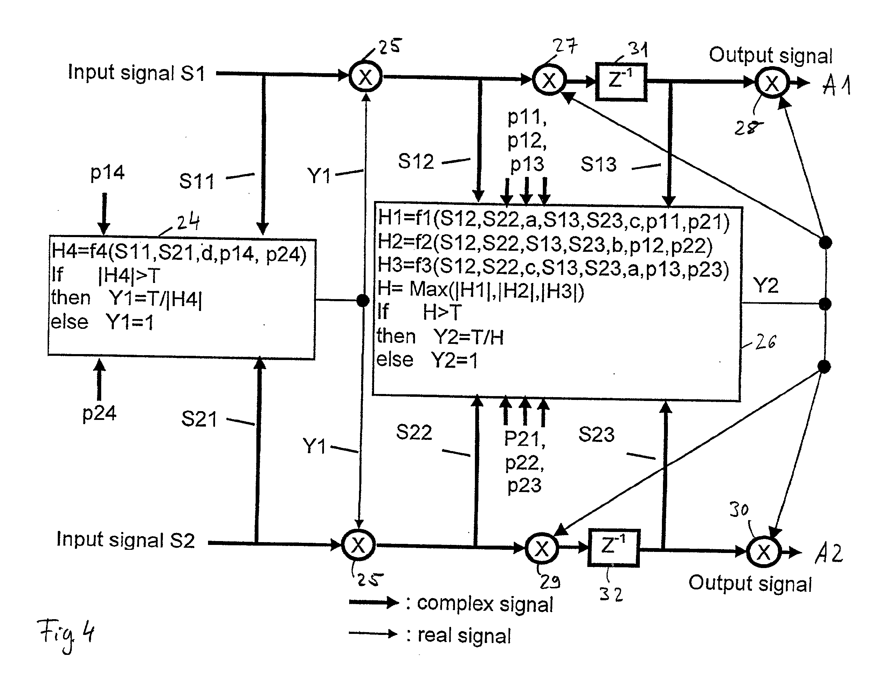

Figure 4 shows a block diagram of an embodiment of the clipper 12. The clipper 12 has a module 24 for calculating a value H4 by means of a function f4 having parameters S11, S21, d, p14 and p24.

The filter coefficient d of the pulse shaping filters 13 is present in the module 24 as a priori knowledge. The signal S11 is equal to the input signal S1 and the signal S21 is equal to the input signal S2. Both input signals S11 and S21 are inputted into the module 24 as well as the sub-signals p14 and p24 (cf. signals p1 and p2 of figure 2 and figure 3).

Further the module 24 has the value of the threshold T as a priori knowledge. The absolute value of H4 is compared to the threshold value T. If the absolute value of H4 exceeds the threshold value T then a factor Y1 is calculated. The factor Y1 is calculated by dividing the threshold T by the absolute value of H4. If the absolute value of H4 does not exceed the threshold value T the factor Y1 is equal to one by definition.

The factor Y1 is outputted from the module 24 and inputted into the multipliers 25 for multiplication of the input signals S1 and S2 with Y1. This results in the signals S12 and S22, respectively.

The signals S12 and S22 as well as the sub-signals p11, p12, p13 and p21, p22, p23 are inputted into the module 26. The module 26 serves to calculate values H1, H2 and H3.

The value of H1 is a function f1 of the signals S12, S22, the filter coefficients a and c, the sub-signals p11 and p21 as well as the further signals S13 and S23. The value of H2 is determined by means of the function f2 which has the parameters S12, S22, S13, S23, b, p12 and p22. The value of H3 is determined by means of the function f3 having the parameters S12, S22, c, S13, S23, a, p13 and p23.

The module 26 determines the maximum of the absolute values of H1, H2 and H3 which is the value H. If H exceeds the threshold value T then the scaling factor Y2 equals T divided by H. If the contrary is the case the scaling factor Y2 is equal to 1.

The factor Y2 is outputted by the module 26 and inputted into the multipliers 27, 28 and 29, 30, respectively. The other input of the multiplier 27 is the signal S12 which is multiplied by Y2.

The output of the multiplier 27 is inputted into the delay element 31. The output of the delay element 31 is the input of the multiplier 28 which provides the output signal A1. The output of the delay element 31 is at the same time the signal S13 which is inputted into the module 26.

The input of the multiplier 29 is the signal S22 which is multiplied by the factor Y2. The output of the multiplier 29 is inputted into the delay element 32. This provides the output S23 which is inputted into the module 26 and into the multiplier 30 for multiplication with the factor Y2. The output of the multiplier 30 is the output signal A2.

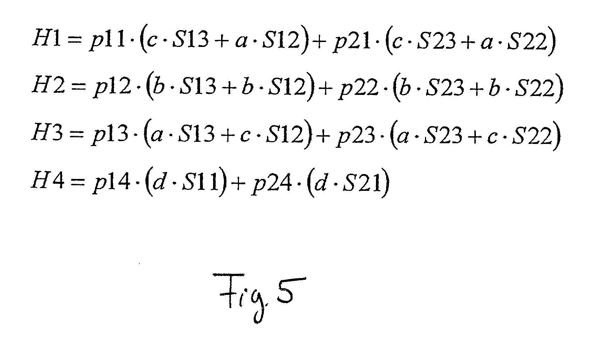

Figure 5 shows the functions f1, f2, f3 and f4 for calculating H1, H2, H3 and H4, respectively.

### list of reference numerals

- electrical circuit: 10
- summer: 11
- clipper: 12
- pulse shaping filter: 13
- multiplier: 14
- summer: 15
- digital-to-analogue-converter: 16
- electrical circuit: 17
- LO-generator: 18
- LO-generator: 19
- delay element: 20
- delay element: 21
- demultiplexer: 22
- demultiplexer: 23
- module: 24
- multiplier: 25
- module: 26
- multiplier: 27
- multiplier: 28
- multiplier: 29
- multiplier: 30
- delay element: 31

## Claims

1. A method of clipping of at least first (CS1; S1) and second (CS2; S2) input signals to provide an output signal (C) which does not exceed a predefined threshold value (T), the method comprising the steps of:
- providing a first sample (S11) of the first input signal and a second sample (S21) of the second input signal,
- applying a criterion to the first and the second sample,
- clipping of the first and / or the second sample if the criterion is fulfilled such that the predefined threshold value is not exceeded after a subsequent filter and summation operation to produce the output signal.

2. The method of claim 1 further comprising adding the amplitude of the first and second samples and whereby the criterion consists in comparing the added amplitudes to a second predefined threshold.

3. The method of claim 1 further comprising multiplying the first and second samples with a factor if the criterion is fulfilled.

4. The method of claim 1 whereby the criterion takes into account a subsequent interpolation to be performed by a pulse shape filter (13) and subsequent frequency multiplexing (14, 18, 19, 20, 21) prior to the summation.

5. A computer program for performing a method in accordance with claim 1.

6. An electronic circuit for clipping of at least first (CS1; S1) and second input (CS2; S2) signals to provide an output signal (C) which does not exceed a predefined threshold, the electronic circuit comprising:
- input means for inputting of a first sample of the first input signal and of a second sample of the second input signal,
- means (12, 24, 26) for applying a criterion on the first and second samples,
- means (25, 27, 28, 29, 30) for clipping the first and / or second sample if the criterion is fulfilled in order to enable subsequent filter and summation operations of the first and second input signals such that the predefined threshold is not exceeded.

7. The electronic circuit of claim 6 the means for applying a criterion comprising:
- means for adding the amplitudes of the first and second samples,
- means for comparing the added amplitudes to the predefined threshold for application of the criterion.

8. The electronic circuit of claim 7, the means for clipping comprising multiplication means for multiplying the first and / or second samples with a factor, if the criterion is fulfilled.

9. The electronic circuit of claim 6 the means for applying a criterion being adapted to apply a criterion taking into account a subsequent interpolation performed by a pulse shape filter (13) and subsequent frequency multiplexing (14, 18, 19, 20, 21) of the first and second input signals.

10. A radio system, such as a base station or a CDMA radio transmitter, comprising an electronic circuit in accordance with claim 6.
